# EUROPÄISCHE PATENTSCHRIFT

(11) **EP 3 009 827 B1**
(45) Veröffentlichungstag und Bekanntmachung des Hinweises auf die Patenterteilung: **05.07.2017**
(21) Anmeldenummer: 15188917.7
(22) Anmeldetag: 08.10.2015
(51) Int. Cl.: G01M 99/00

(54) **PRÜFVERFAHREN UND VORRICHTUNG ZUR FESTSTELLUNG EINES GEFORDERTEN FUNKTIONSERHALTS EINER IM REGELBETRIEB IN EINEM SCHUTZGEHÄUSE ANGEORDNETEN TECHNISCHEN ANLAGE IM BRANDFALLE**
TESTING METHOD AND DEVICE FOR ASSESSING A REQUIRED FUNCTIONAL INTEGRITY OF A TECHNICAL INSTALLATION NORMALLY ARRANGED IN A PROTECTIVE HOUSING
PROCEDE DE VERIFICATION ET DISPOSITIF D'ÉVALUATION D'UN FONCTIONNEMENT DE LONGUE DUREE REQUIS D'UNE INSTALLATION TECHNIQUE DISPOSEE DANS UN BOITIER DE PROTECTION EN FONCTIONNEMENT NORMAL EN CAS D'INCENDIE

(30) Priorität: 14.10.2014 DE 102014114908
(43) Veröffentlichungstag der Anmeldung: 20.04.2016
(73) Patentinhaber: Reuter, Martin, 63457 Hanau (DE)
(72) Erfinder: Reuter, Martin, 63457 Hanau (DE)
(74) Vertreter: Wolf, Michael

(56) Entgegenhaltungen:
- DE-A1- 19 710 019
- DE-U1- 20 013 299
- US-A1- 2014 236 552

## Beschreibung

Die Erfindung betrifft ein Prüfverfahren zur Feststellung eines geforderten Funktionserhalts einer im Regelbetrieb in einem Schutzgehäuse angeordneten technischen Anlage im Brandfalle gemäß dem Oberbegriff des Patentanspruchs 1.

Eine technische Anlage, wie zum Beispiel eine Notbeleuchtungsanlage oder dergleichen, muss, natürlich auch um gesetzlichen Vorgaben zu genügen, für eine vorgegebene Zeitspanne (zum Beispiel 30, 60 oder 90 Minuten) auch im Brandfalle funktionieren. Hierzu wird eine solche technische Anlage in ein Schutzgehäuse eingebaut, das im Brandfalle eine Reduktion der klimatischen (insbesondere thermischen) Belastung der technischen Anlage gewährleisten soll.

Vor Inbetriebnahme einer solchen Kombination aus Schutzgehäuse und technischer Anlage, die ihrerseits häufig selbst Wärme abgibt, ist es erforderlich, den Funktionserhalt der im Schutzgehäuse angeordneten technischen Anlage im Brandfalle zu prüfen. Dies geschieht heutzutage dadurch, dass die technische Anlage in ein Schutzgehäuse eingebaut und anschließend dieses Schutzgehäuse unter vorgegebenen Bedingungen in einer so genannten Brandkammer von außen beflammt wird. Der Funktionserhalt gilt dann als nachgewiesen, wenn die technische Anlage am Ende der vorgegebenen Zeitspanne trotz der Beflammung des Schutzgehäuses noch funktioniert.

Zu beachten ist dabei, dass bei gleichem Schutzgehäuse, aber anderer technischer Anlage stets ein neuer Brandkammertest durchgeführt werden muss, da unterschiedliche technische Anlagen unterschiedlich viel Wärme an den Innenraum des Schutzgehäuses abgeben, was wiederum zur Folge hat, dass bei einem bestimmten Schutzgehäuse der Funktionserhalt für eine bestimmte technische Anlage durchaus gewährleistet ist, dies bei Einsatz einer anderen technischen Anlage aber gerade nicht (mehr) der Fall ist. Typische Prüfkammern sind aus DE 19710019 A1, DE 20013299 U1 und US 20140236552 A1 bekannt. Der Erfindung liegt die Aufgabe zugrunde, das kostenintensive Prüfverfahren der eingangs genannten Art zu verbessern. Insbesondere soll dabei die Anzahl der in der Brandkammer durch die Beflammung zerstörten Schutzgehäuse und technischen Anlagen reduziert werden.

Diese Aufgabe ist durch die im Kennzeichen des Patentanspruchs 1 aufgeführten Merkmale gelöst.

Nach der Erfindung ist somit vorgesehen, dass zunächst innerhalb einer vorgegebenen Zeitspanne ein anlagenfreies Schutzgehäuse von außen beflammt und eine sich im Schutzgehäuse ergebende Klimakurve erfasst wird, dass in einem weiteren, anlagenfreien Schutzgehäuse mit einer im Schutzgehäuse angeordneten Klimatisierungseinrichtung für eine gleiche Zeitspanne eine gleiche Klimakurve nachgebildet und die dabei erforderlichen Steuersignale für die Klimatisierungseinrichtung erfasst werden und dass zur Überprüfung des Funktionserhalts einer in Betrieb befindlichen bzw. bestimmungsgemäß betriebenen technischen Anlage innerhalb der vorgegebenen Zeitspanne die erfassten Steuersignale zur Ansteuerung einer in einem mit der technischen Anlage versehenen Schutzgehäuse angeordneten Klimatisierungseinrichtung verwendet werden.

Mit anderen Worten zeichnet sich die erfindungsgemäße Lösung somit insbesondere dadurch aus, dass die bisher in einem einzigen Schritt durchgeführte Funktionserhaltprüfung nunmehr in mehrere Schritte aufgeteilt wird, wobei die zerstörende Prüfung des Schutzgehäuses in der Brandkammer für alle möglichen technischen Anlagen lediglich noch ein einziges Mal durchgeführt werden muss, und zwar deswegen, weil man das Schutzgehäuse zunächst - gewissermaßen allgemein - ohne die technische Anlage bzw. jedenfalls bei ausgeschalteter Anlage beflammt. Die sich dabei innerhalb der vorgegebenen Zeitspanne im Innern des Schutzgehäuses ergebende Klimakurve wird erfasst und für den nachfolgenden Schritt gespeichert.

Dieser ist nun dadurch gekennzeichnet, dass in einem mit einer Klimatisierungseinrichtung versehenen Schutzgehäuse, in dem zunächst keine technische Anlage bzw. jedenfalls eine ausgeschaltete technische Anlage angeordnet ist, für die vorgegebene Zeitspanne die beim Beflammen in der Brandkammer ermittelte Klimakurve nachgebildet wird, d. h. mittels der Klimatisierungseinrichtung wird im Innern des Schutzgehäuses die Klimakurve erzeugt, die ursprünglich bei Beflammung in der Brandkammer ermittelt wurde. Dieser zweite Schritt, bei dem das Schutzgehäuse nicht beschädigt wird, dient dabei dazu, herauszufinden, wie die Klimatisierungseinrichtung betrieben werden muss, um die für die vorgegebene Zeitspanne ermittelte Klimakurve zu erreichen bzw. zu realisieren.

Ist schließlich bekannt, mit welchen Steuervorgaben die Klimatisierungseinrichtung zur Nachbildung der Klimakurve betrieben werden muss, wird als dritter Schritt, der, was unten noch genauer erläutert wird, auch zeitgleich mit dem zweiten Schritt erfolgen kann, wahlweise im gleichen oder in einem baugleichen Schutzgehäuse eine technische Anlage angeordnet und mittels der bzw. einer Klimatisierungseinrichtung für die vorgegebene Zeitspanne entsprechend der ermittelten Klimakurve beaufschlagt, um zu ermitteln, ob die technische Anlage bis zum Ende der vorgegebenen Zeitspanne funktionstüchtig bleibt.

Wie ersichtlich führt dabei die Aufteilung der Funktionserhaltprüfung in mehrere Schritte dazu, dass jedes Schutzgehäuse lediglich einmal einer zerstörenden Prüfung in der Brandkammer unterzogen werden muss und dass bei einem Wechsel der technischen Anlage lediglich noch einmal auf Basis der ermittelten Klimakurve eine Art Vergleichstest zwischen anlagenfreiem und mit in Betrieb befindlicher technischer Anlage bestücktem Schutzgehäuse durchgeführt werden muss. Die Prüfung des Funktionserhalts verschiedener technischer Anlagen für ein bereits in der Brandkammer getestetes, anlagenfreies Schutzgehäuse kann somit praktisch zerstörungsfrei erfolgen.

Zu den oben verwendeten Begriffen hier noch einige Erläuterungen:
Unter einem "Schutzgehäuse" ist im Rahmen dieser Beschreibung einerseits jedes Gehäuse bzw. jede allseitig umschlossene, erforderlichenfalls mit Türen, Kabel- und/oder Lüftungsschotts versehene Raumeinheit zu verstehen, die geeignet ist, innerhalb einer vorgegebenen Zeitspanne (zum Beispiel 30, 60 oder 90 Minuten) einem Brand derart zu widerstehen, dass die darin angeordnete technische Anlage jedenfalls bis zum Ende der Zeitspanne funktioniert. Häufig bestehen die Wände derartiger Gehäuse aus Gipsplatten, wobei darüber hinaus regelmäßig die Rückwand des Gehäuses einfach durch eine Wand des Aufstellungsgebäudes gebildet wird.

Andererseits kann im Rahmen der Erfindung und in Bezug auf die mit einer Klimatisierungseinrichtung versehenen Gehäuse unter dem Begriff "Schutzgehäuse" aber auch ein solches Gehäuse verstanden werden, das zur Nachbildung gleicher klimatischer Verhältnisse in seinem Inneren wie beim vorerwähnten Brandkammertest geeignet ist, ohne dabei selbst einer Beflammung von außen standhalten zu müssen. - Oder mit anderen Worten: Selbstverständlich kann für das Nachfahren der Klimakurven letztlich auch ein Original-Schutzgehäuse verwendet werden, es genügt aber auch ein zum Beispiel bezüglich seiner Bedämmung und seiner Geometrie ähnliches, für den besagten Zweck geeignetes Gehäuse.

Unter einer "technischen Anlage" ist im Rahmen dieser Beschreibung, wie bereits erwähnt, zum Beispiel eine Notbeleuchtungsanlage zu verstehen. Es kann sich aber auch um einen Antrieb, eine elektrische oder elektronische Schalt-, Steuer- oder Regelungsanlage, eine Engeriespeicheranlage (Akkumulatoren), eine Datenspeicheranlage oder dergleichen handeln. Typisch für solche Anlagen ist, dass sie im Brandfalle jedenfalls für eine gewisse Zeitspanne funktionstüchtig bleiben müssen, um - am Beispiel einer Notbeleuchtungsanlage orientiert - Beschäftigten in einem Bürogebäude den Fluchtweg auszuleuchten.

Die verwendete Maßgabe "anlagenfrei" " bedeutet einerseits ganz wörtlich, dass keine technische Anlage im Schutzgehäuse angeordnet ist. Andererseits ist damit aber auch, wie bereits erwähnt, gemeint, dass zwar eine technische Anlage im Schutzgehäuse vorhanden, diese aber jedenfalls nicht in Betrieb ist und somit jedenfalls insbesondere keine Wärme oder Feuchtigkeit abgibt.

Unter einer "Klimatisierungseinrichtung" ist im Rahmen dieser Beschreibung jede Einrichtung zu verstehen, die geeignet ist, im Schutzgehäuse klimatisch vergleichbare Bedingungen zu schaffen, wie sie sich beim Brandkammertest (also bei Beflammung des Schutzgehäuses von außen) im Innern des Schutzgehäuses ergeben haben. Unter klimatischen Bedingungen sind dabei insbesondere eine sich ergebende Temperatur und eine sich ergebende Luftfeuchtigkeit gemeint.

Unter einer "Klimakurve" ist im Rahmen dieser Beschreibung letztlich ein Datensatz zu verstehen, bei dem bestimmte Zeitpunkte mit bestimmten Klimawerten wie insbesondere Temperatur und Luftfeuchtigkeit verbunden sind.

Unter einer "Sensoreinrichtung" ist im Rahmen dieser Beschreibung jede Einrichtung zu verstehen, die geeignet ist, klimatische Verhältnisse, also insbesondere Temperatur- und Luftfeuchtigkeitswerte, im Innern des Schutzgehäuses zu erfassen.

Unter einer "Steuerungseinrichtung" ist im Rahmen dieser Beschreibung schließlich jede Einrichtung zu verstehen, die geeignet ist, Steuersignale der Klimatisierungseinrichtung beim Nachfahren der Klimakurve zu erfassen (Schritt 2) bzw. der Klimatisierungseinrichtung Steuersignale zum Nachbilden der Klimakurve vorzugeben (Schritt 3). Sollte dabei, was regelmäßig der Fall sein wird, ein Regelkreis zwischen Steuerungseinrichtung und Klimatisierungseinrichtung vorgesehen sein, so ist der Begriff "Steuerungseinrichtung" letztlich mit dem Begriff "Regelungseinrichtung" gleichzusetzen.

Eine besonders bevorzugte Ausführungsform der erfindungsgemäßen Vorrichtung besteht, was unten noch genauer erläutert wird, darin, das Schutzgehäuse mit der Klimatisierungseinrichtung doppelt vorzuhalten, um in dem einen Schutzgehäuse ohne technische Anlage durch Nachfahren der Klimakurve die Steuersignale für die Klimatisierungseinrichtung zu ermitteln und um praktisch gleichzeitig im anderen Schutzgehäuse, in dem eine in Betrieb befindliche technische Anlage angeordnet ist, die Klimatisierungseinrichtung auf Basis der ermittelten Steuersignale zu betreiben und um am Ende der vorgegebenen Zeitspanne festzustellen, ob die technische Anlage noch funktioniert, sprich der Funktionserhalt auch für diese technischen Anlage gewährleistet ist.

Andere vorteilhafte Weiterbildungen des erfindungsgemäßen Verfahrens ergeben sich aus dem abhängigen Patentanspruch.

Das erfindungsgemäße Verfahren einschließlich seiner vorteilhaften Weiterbildung gemäß des abhängigen Patentanspruchs werden nachfolgend anhand der zeichnerischen Darstellung zweier Ausführungsbeispiele näher erläutert.

Es zeigt
- Figur 1: im Schnitt und von der Seite eine erste Ausführungsform; und
- Figur 2: schematisch eine besonders bevorzugte Ausführungsform mit zwei Schutzgehäusen.

Erfindungsgemäß ist, wie bereits erläutert, ein Prüfverfahren vorgesehen, bei dem ein im Brandfall geforderter Funktionserhalt einer im Regelbetrieb in einem Schutzgehäuse 1 angeordneten technischen Anlage 2 geprüft wird.

Dabei ist vorgesehen, dass zunächst - als Schritt 1 - innerhalb einer vorgegebenen Zeitspanne ein anlagenfreies Schutzgehäuse 1 im Rahmen des so genannten Brandkammertests von außen beflammt und eine sich im Schutzgehäuse 1 ergebende Klimakurve erfasst wird. Im Anschluss daran ist - als Schritt 2 - vorgesehen, dass in einem weiteren, anlagenfreien Schutzgehäuse 1 mit einer im Schutzgehäuse 1 angeordneten Klimatisierungseinrichtung 3 für eine gleiche Zeitspanne eine gleiche Klimakurve nachgebildet und die dabei erforderlichen Steuersignale für die Klimatisierungseinrichtung 3 erfasst werden. Gleichzeitig oder danach ist - als Schritt 3 - vorgesehen, dass zur Überprüfung des Funktionserhalts einer bestimmungsgemäß betriebenen technischen Anlage 2 innerhalb der vorgegebenen Zeitspanne die erfassten Steuersignale zur Ansteuerung einer in einem mit der technischen Anlage 2 versehenen Schutzgehäuse 1 angeordneten Klimatisierungseinrichtung 3 verwendet werden.

Soll der dritte Schritt dabei insbesondere gleichzeitig mit dem zweiten Schritt erfolgen, so ist vorgesehen, dass die beim Nachbilden der Klimakurve erfassten Steuersignale für die Klimatisierungseinrichtung 3 vorzugsweise unmittelbar zur Ansteuerung einer in einem zweiten Schutzgehäuse 1 angeordneten zweiten Klimatisierungseinrichtung 3 verwendet werden.

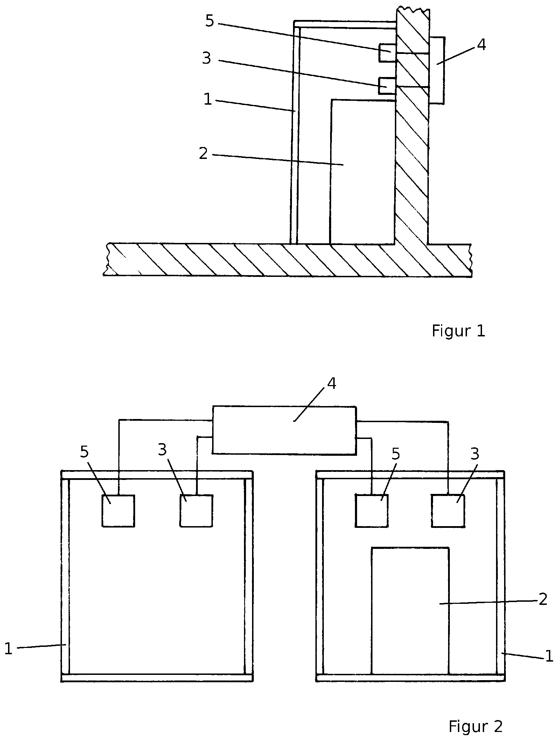

In den Figuren 1 und 2 sind, wie ersichtlich, verschiedene Ausführungsformen der Vorrichtung zur Feststellung eines geforderten Funktionserhalts einer im Regelbetrieb in einem Schutzgehäuse 1 angeordneten technischen Anlage 2 im Brandfalle dargestellt.

Bei allen Ausführungsformen ist dabei vorgesehen, dass im Schutzgehäuse 1 einerseits eine mit einer Steuerungseinrichtung 4 verbundene Klimatisierungseinrichtung 3 und andererseits zur Erfassung von Klimawerten innerhalb einer vorgegebenen Zeitspanne eine mit der Steuerungseinrichtung 4 verbundene Sensoreinrichtung 5 vorgesehen sind.

Diese Vorrichtung ist insbesondere geeignet zur Durchführung des vorerwähnten zweiten Schrittes. Sollte der dritte Schritt entsprechend zeitversetzt im gleichen Schutzgehäuse 1 durchgeführt werden, ist es auch hierfür geeignet.

Alternativ, und diese Ausführungsform ist aufgrund der auf diese Weise erreichbaren Zeiteinsparung bevorzugt, kann aber auch, wie vorerwähnt, ein zweites Schutzgehäuse 1 vorgesehen sein, in dem eine zweite, (ebenfalls) mit der Steuerungseinrichtung 4 verbundene Klimatisierungseinrichtung 3 angeordnet ist. Dabei ist in diesem Fall vorgesehen, dass das erste Schutzgehäuse 1 anlagenfrei und im zweiten Schutzgehäuse 1 die bestimmungsgemäß betriebene technische Anlage 2 angeordnet ist. Außerdem ist auch im zweiten Schutzgehäuse 1 eine zweite, vorzugsweise mit der Steuerungseinrichtung 4 verbundene Sensoreinrichtung 5 angeordnet.

Wie eingangs erläutert, dient die im ersten und gegebenenfalls zweiten Schutzgehäuse 1 angeordnete Klimatisierungseinrichtung 3 dazu, im Schutzgehäuse 1 klimatisch vergleichbare Bedingungen zu schaffen, wie sie sich beim Brandkammertest - im ersten Schritt - im Innern des Schutzgehäuses 1 ergeben haben. Hierzu ist genauer betrachtet vorgesehen, dass die Klimatisierungseinrichtung 3 wahlweise einen zum Beispiel elektrisch betriebenen Wärmeerzeuger und/oder einen Luftbefeuchter umfasst.

Weiterhin ist vorgesehen, dass die vorzugsweise außerhalb des Schutzgehäuses 1 angeordnete Steuerungseinrichtung 4 sowohl zur Erfassung als auch zur Vorgabe von Steuersignalen für die erste und gegebenenfalls zweite Klimatisierungseinrichtung 3 ausgebildet ist.

Neben der Verbindung zur Klimatisierungseinrichtung 3 ist darüber hinaus vorgesehen, dass die Steuerungseinrichtung 4 zur Verarbeitung von mit der ersten und gegebenenfalls zweiten Sensoreinrichtung 5 erfassten Klimawerten ausgebildet ist, wobei ferner vorgesehen ist, dass die Steuerungseinrichtung 4 auch zur Speicherung einer bzw. der Klimakurve ausgebildet ist. Die genannte Sensoreinrichtung 5 umfasst dabei wahlweise eine Temperaturmesseinrichtung und/oder eine Feuchtigkeitsmesseinrichtung.

Nochmals in anderen Worten ausgedrückt, funktioniert die erfindungsgemäße Lösung wie folgt:
Ausgangspunkt ist nach wie vor ein so genannter Brandkammertest, bei dem allerdings ein anlagenfreies Schutzgehäuse 1 verwendet bzw. beflammt wird. Die in der vorgegebene Zeitspanne im Innern des Schutzgehäuses 1 ermittelten Klimawerte werden in Form einer zeitabhängigen Klimakurve erfasst und für den nächsten Schritt der erfindungsgemäßen Lösung gespeichert.

Bei diesem nächsten Schritt wird mit Hilfe der in einem anlagenfreien Schutzgehäuse 1 angeordneten Klimatisierungseinrichtung 3 die im ersten Schritt erfasste Klimakurve nachgefahren, d. h. die Klimatisierungseinrichtung 3 wird letztlich Stück für Stück so eingestellt, dass mit der Sensoreinrichtung 5 genau die gleiche Klimakurve erfasst werden kann wie beim Brandkammertest im ersten Schritt. Dieser zweite Schritt dient dabei dazu, zu ermitteln, welche Steuersignale für die Klimatisierungseinrichtung 3 erforderlich sind, um die im ersten Schritt ermittelte Klimakurve genau zu erreichen.

Im dritten Schritt, der, wie erläutert, bei Vorhandensein eines weiteren Schutzgehäuses 1 (siehe hierzu insbesondere Figur 2) auch parallel zum zweiten Schritt stattfinden kann, werden die ermittelten Steuersignale verwendet, um eine Klimatisierungseinrichtung 3 zu betreiben, die in einem Schutzgehäuse 1 angeordnet ist, in dem auch eine bestimmungsgemäß betriebene technische Anlage 2 vorhanden ist, wobei am Ende der vorgegebenen Zeitspanne festgestellt werden kann, ob die technische Anlage 2, die ja einerseits - ohne dabei Einfluss auf die Steuersignale der Klimatisierungseinrichtung 3 zu nehmen - selbst Wärme in das Schutzgehäuse 1 einbringt, andererseits aber auch noch die durch die Klimatisierungseinrichtung 3 erzeugte Wärme und Feuchtigkeit verkraften muss, noch funktioniert oder nicht.

Der große Vorteil der erfindungsgemäßen Lösung besteht dabei insgesamt, wie ersichtlich, insbesondere darin, dass lediglich ein Schutzgehäuse 1 einer zerstörenden Prüfung in der Brandkammer unterworfen werden muss, während der Funktionserhalt unterschiedlicher technischer Anlagen 2 auf Basis der bei dem einzigen Brandkammertest für dieses Schutzgehäuse 1 gewonnenen Daten (Klimakurve) ohne Zerstörung des Schutzgehäuses 1 erfolgen kann.

### Bezugszeichenliste

- 1: Schutzgehäuse
- 2: technische Anlage
- 3: Klimatisierungseinrichtung
- 4: Steuerungseinrichtung
- 5: Sensoreinrichtung

## Patentansprüche

1. Prüfverfahren, bei dem ein im Brandfall geforderter Funktionserhalt einer im Regelbetrieb in einem Schutzgehäuse (1) angeordneten technischen Anlage (2) geprüft wird, **dadurch gekennzeichnet,**
**dass** zunächst innerhalb einer vorgegebenen Zeitspanne ein anlagenfreies Schutzgehäuse (1) von außen beflammt und eine sich im Schutzgehäuse (1) ergebende Klimakurve erfasst wird,
**dass** in einem weiteren, anlagenfreien Schutzgehäuse (1) mit einer im Schutzgehäuse (1) angeordneten Klimatisierungseinrichtung (3) für eine gleiche Zeitspanne eine gleiche Klimakurve nachgebildet und die dabei erforderlichen Steuersignale für die Klimatisierungseinrichtung (3) erfasst werden,
**dass** zur Überprüfung des Funktionserhalts einer bestimmungsgemäß betriebenen technischen Anlage (2) innerhalb der vorgegebenen Zeitspanne die erfassten Steuersignale zur Ansteuerung einer in einem mit der technischen Anlage (2) versehenen Schutzgehäuse (1) angeordneten Klimatisierungseinrichtung (3) verwendet werden.

2. Verfahren nach Anspruch 1,
**dadurch gekennzeichnet,**
**dass** die beim Nachbilden der Klimakurve erfassten Steuersignale für die Klimatisierungseinrichtung (3) zur Ansteuerung einer in einem zweiten Schutzgehäuse (1) angeordneten zweiten Klimatisierungseinrichtung (3) verwendet werden.

## Claims

1. A testing method in which a functional integrity required in the case of fire of a technical installation (2) arranged in normal operation in a protective housing (1) is tested,
**characterized in**
**that** firstly within a predefined time interval an installation-free protective housing (1) is exposed to flames from outside and a climate curve obtained in the protective housing (1) is recorded,
**that** in another installation-free protective housing (1) with an air-conditioning device (3) arranged in the protective housing (1) the same climate curve is simulated for the same time interval and the control signals required here for the air-conditioning device (3) are recorded,
**that** the recorded control signals are used to actuate an air-conditioning device (3) arranged in a protective housing (1) provided with the technical installation (2) are used to check the functional integrity of a technical installation (2) operated as intended within the predefined time interval.

2. The method according to claim 1,
**characterized in**
**that** the control signals for the air-conditioning device (3) recording when simulating the climate curve are used to actuate a second air-conditioning device (3) arranged in a second protective housing (1).

## Revendications

1. Procédé de test, dans lequel une fonctionnalité exigée en cas d'incendie d'une installation technique (2) disposée en fonctionnement régulier dans une enceinte de protection (1) est testée, **caractérisé**
**en ce que** tout d'abord en l'espace d'une période de temps prescrite une enceinte de protection (1) dépourvue d'installations est exposée aux flammes par l'extérieur et une courbe climatique en résultant dans l'enceinte de protection (1) est détectée,
**en ce que** dans une enceinte de protection (1) supplémentaire, dépourvue d'installations comportant un dispositif de climatisation (3) disposé dans l'enceinte de protection (1) une courbe climatique identique est reproduite pour une période de temps identique et les signaux de commande ainsi nécessaires pour le dispositif de climatisation (3) sont détectés,
**en ce que** pour contrôler la fonctionnalité d'une installation technique (2) fonctionnant de manière conforme, les signaux de commande détectés sont utilisés pour commander un dispositif de climatisation (3) disposé dans une enceinte de protection (1) pourvue de l'installation technique (2) en l'espace de la période de temps prescrite.

2. Procédé selon la revendication 1,
**caractérisé**
**en ce que** les signaux de commande pour le dispositif de climatisation (3) détectés lors de la reproduction de la courbe climatique sont utilisés afin de commander un deuxième dispositif de climatisation (3) disposé dans une deuxième enceinte de protection (1).
